# EUROPEAN PATENT APPLICATION

(11) **EP 2 028 914 A2**
(43) Date of publication of application: **25.02.2009**
(21) Application number: 08252824.1
(22) Date of filing: 26.08.2008
(51) Int. Cl.: H05B 41/30, H05B 41/32

(54) **Flash lamp device**

(30) Priority: 24.08.2007 CN 200720113723 U
(71) Applicant: Ningbo Jinhui Photographic Equipment Co., Ltd., Southwest Economy Development Yuyao City Zhejiang (CN)
(72) Inventor: Pu, YiFei, Yuyao City, Zheiiang Province (CN); Yuang, Jiguang, Yuyao City, Zheiiang Province (CN)
(74) Representative: Findlay, Alice Rosemary

(57) **Abstract**

A flash lamp device including at least a main control circuit having a microprocessor and an operation control circuit connected to the main control circuit. The main control circuit is coupled to an LCD control and display circuit and a software module controlling said LCD control and display circuit.

## Description

This present invention relates to a flash lamp and more particularly to a photoflood lamp device for use with a camera.

A digital camera cannot shoot clear photographs when the light is insufficient. A flash lamp can effectively solve the problem of insufficient light and can provide an auxiliary light source for digital cameras. A flash lamp can also effectively expand the use of digital cameras without regard to light insufficiencies. Existing flash lamps are provided with functions like modeling lamps, flash mode, light control and light adjustment. To display different statuses, current flash lamp devices include indicator lights corresponding to those functions. Some high-grade cameras can also include staged light adjustment functions, which can adjust the flash output of the flash lamp by time according to the changes of the environment light and light sources. However, the function control and function display modules are generally provided at a control panel on the camera itself. The working status of the flash lamp is set by various function buttons on the operation panel of the camera.

With the development of science and technology, today's flash lamps for digital cameras are provided with "Anti-red-eye" control mode and some are provided with infrared reception functions for use with a remote controller. With the addition of more functions, the number of the status indicator lights accordingly, the size of the control panel may become larger and larger. However, the camera itself is required to be more and more compact to be more easily carried. The conflict between reduced camera size and increased functional capability may reduce the likelihood of the further development of flash lamps.

Flash lamps are disclosed in US Patent Numbers D544,978, D547,894, D547,895, D547,896, and D548,869 each of which is incorporated in its entirety by reference herein.

The present invention includes a flash lamp device that can provide an indication of various statuses without the use of indicator lights.

The present invention can include a flash lamp device having at least a main control circuit with a microprocessor and an operation control circuit connected to the main control circuit. The main control circuit can be connected to a liquid crystal display (LCD) control and display circuit and a software module controlling the LCD control and the display circuit. The main control circuit can display a working status of the flash lamp through the LCD control and the display circuit according to the control information set by the operation control circuit.

The main control circuit of the flash lamp device can further be connected to a voltage detection circuit. The positive pole of the external power supply of the circuit is connected to a current limiting and rectifying circuit. The output terminal of the circuit can be connected to a bleeder filter circuit. The output terminal of the bleeder filter circuit can be connected to a pin of the microprocessor of the main control circuit, which can realize real-time transmission of the detected voltage variation of current power supply to the microprocessor of the main control circuit. The detected voltage variation is then transmitted to the LCD control and display circuit for display after being recognized or sensed by the microprocessor.

The main control circuit can be further connected to a memory circuit including a rewritable register wherein the writing pin of the main control circuit microprocessor can be connected to the writing output pin of the rewritable register. The reading pin of the rewritable register can be connected to the reading pin of the main control circuit microprocessor. The writing pin and the reading pin of the rewritable register can be respectively coupled to a resistor before being connected to the regulated power supply. The memory circuit can store the working status before a loss of power. When the flash lamp device is restarted, the microprocessor of the main control circuit can read the working status before the loss of power from the reading pin of the rewritable register in the memory circuit. Once read, the working status of the flash lamp can be set according to the received content of the rewritable register.

The LCD control and display circuit include an LCD. Three control signal pins of the microprocessor of the main control circuit are respectively connected to the three data cable pins of the LCD. Other pins of the LCD and the peripheral circuit together form the voltage doubling circuit for driving the LCD to display images.

The operation control circuit includes a mode switch, a confirmation switch, a pageup switch and a pagedown switch. The mode switch, the confirmation switch, the pageup switch and the pagedown switch are mutually connected by a parallel connection after being coupled to a resistor respectively. One output terminal of the parallel circuit can be grounded. Another output terminal can be connected to a signal detection pin of the microprocessor of the main control circuit. Furthermore, the signal detection pin can be connected to the regulated power supply after being connected to a resistor. At the same time, the signal detection pin can also be grounded after being connected to a resistor.

Compared with existing technologies, this present lamp device at least in preferred embodiments can display the working status of the flash lamp device through an LCD control and display circuit and a software module controlling the circuit connected with the main circuit. The present invention can provide relatively straightforward visualization of the operation of the device to provide for ease of operation. Furthermore, the provision of the voltage detection circuit can provide a real-time transmission of the detected voltage variation of the current power supply to the microprocessor of the main control circuit. The detected variation can be transmitted to the LCD control and display circuit for display after being sensed and determined by the microprocessor.

The invention will now be further described by way of example with reference to the accompanying drawings, in which:

FIG. 1 is a functional module diagram of one embodiment of the present invention;

FIG. 2 is a schematic drawing of a main control circuit of Figure 1;

FIG. 3 is a schematic drawing of a voltage detection circuit of Figure 1;

FIG. 4 is a schematic drawing of the memory circuit of Figure 1;

FIG. 5 is a schematic drawing of the LCD control and display circuit of Figure 1;

FIG. 6 is a schematic drawing of the operation control circuit of Figure 1;

FIG. 7 is a rear elevational view of a flash lamp device of the present invention;

FIG. 8 is one embodiment of a display of the LCD.

FIG. 9 is one embodiment of a display of the LCD.

FIG. 10 is one embodiment of a display of the LCD.

FIG. 11 is one embodiment of a display of the LCD.

FIG. 12 is one embodiment of a display of the LCD.

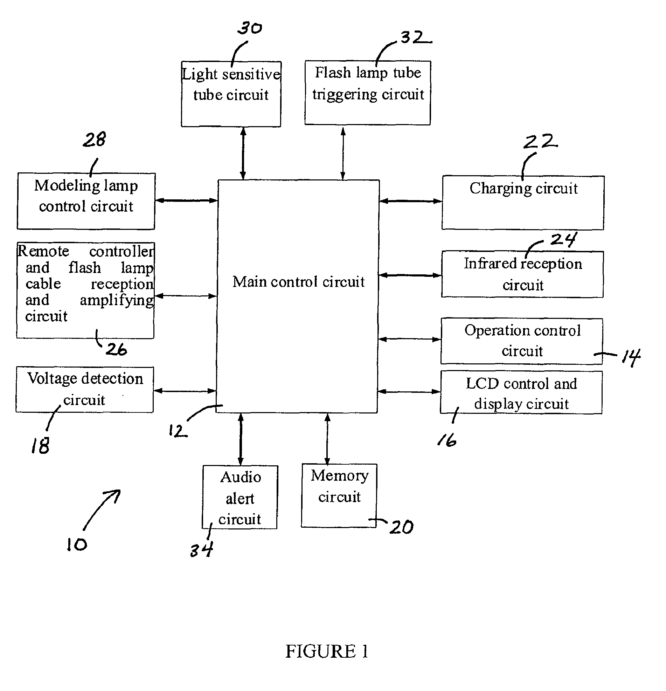

As shown in FIG. 1, the flash lamp device 10 comprises a main control circuit 12, an operation control circuit 14, and an LCD control and display circuit 16 connected to the main control circuit 12. A voltage detection circuit 18, a memory circuit 20, a charging circuit 22, an infrared reception circuit 24, a remote controller and flash lamp cable reception and amplifying circuit 26, a modeling lamp control circuit 28, a light sensitive tube circuit 30, a flash lamp tube triggering circuit 32, and an audio alert circuit 34 are also coupled to the main control circuit 12. A software module in the microprocessor of the main control circuit 1 is programmed to control the LCD control and display circuit 16.

In one embodiment, the main control circuit 12 includes a microprocessor U1. A S3F84I9 control chip or micro control is used for the microprocessor U1 and is available from Samsung Electronics, Yongin-City, Korea. U1 includes forty-two pins, wherein pins 24, 25 and 26 can be connected to the LCD control and display circuit 16 to provide the LCD control and display circuit 16 with control signals for driving the LCD to display various information or statuses. Pin 31 of microprocessor U1 can be connected to the operation control circuit 14 to receive status control signals of the operation control circuit 14 for processing by the microprocessor. Pin 30 of the microprocessor U1 can be connected to the voltage detection circuit 18 for real-time receipt of power signals of the voltage detection circuit 18, which can then be sent or transmitted to the LCD control and display circuit 16 for display after being recognized by the microprocessor. Pin 6 of the microprocessor U1 transmits the current working status of the system to the memory circuit 20 in real time, which can be stored by the memory circuit 20 in real time. When restarting the system after a loss of power, the memory circuit 20 can send the working status before the loss of power to pin 5 of the microprocessor U1. The system can then operate according to the received working status. Pins 19, 23 and 29 of the microprocessor U1 are connected to the charging circuit 22 for controlling the charging of the charging circuit. Pin 8 of the microprocessor U1 is connected to the infrared reception circuit 24. When infrared coding signals are received by the infrared reception circuit, the signals can be amplified and sent to pin 8 of the microprocessor. At this time, the microprocessor sends the content of the infrared coding signals, after processing, to the LCD for display while at the same adjusting changes to the flash lamp. Pin 9 of the microprocessor U1 can be connected to the remote controller and flash lamp cable reception and amplifying circuit 26. The remote controller and flash lamp cable reception and amplifying circuit 8 send the received triggering signals of remote controller or flash lamp cable to pin 9 of the microprocessor for recognition and processing so as to provide the triggering signals. Pin 20 of the microprocessor U1 is connected to the modeling lamp control circuit 25. When the processor receives corresponding control signals from the operation control circuit 14, it can adjust the intensity of the light of the modeling lamp through pin 20. Pin 8 of the microprocessor U1 is connected to the light sensitive tube circuit 30, which sends the flash signals received from the camera to pin 8 of the microprocessor U1. Pin 21 of the microprocessor U1 is connected to the flash lamp tube triggering circuit 32. When pins 8 and 9 of the microprocessor detect light triggering signals received by the infrared reception circuit or triggering signals of the light sensitive tube circuit 30, pin 21 of the microprocessor U1 can output a low level signal to trigger the flash lamp to flash. Pin 2 of microprocessor U1 is connected to the audio alert circuit 34 in response to a corresponding key-pressing operation of the operation control circuit 2 or the charging is complete. Pin 2 of the microprocessor U1 can output a high level signal to drive the audio alert circuit 12 to provide an audible alert or sound.

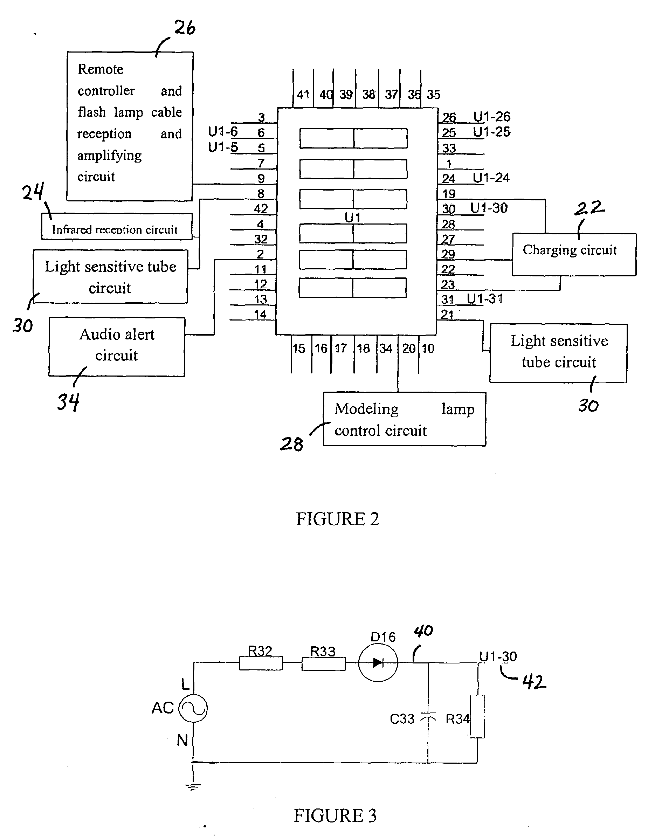

As seen in FIG. 3, the voltage detection circuit 18 connects to an external power supply at the L-pole. A resistor R32, a resister R33 and a diode D6 form a current limiting and rectifying circuit. An output terminal 40 is connected to a bleeder filter circuit including a resistor R34 and capacitor C33. An output terminal 42 of the 12 bleeder filter circuit is connected to pin 30 of the microprocessor U1 of the main control circuit.

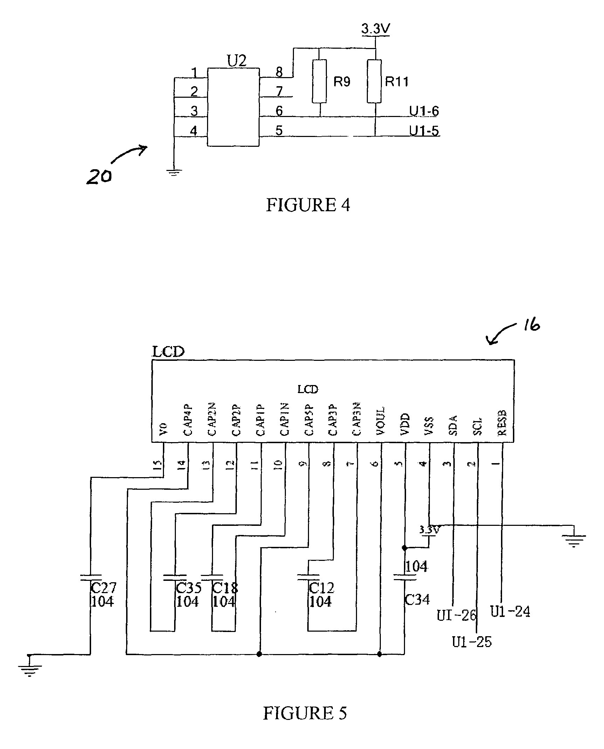

As shown in FIG. 4, the memory circuit 20 includes a rewritable register U2. U2 is available from Taiwan Holtek Group as part number: ht24c01. A writing pin (pin 5) of the main control circuit microprocessor U1 can be connected to the writing pin (pin 5) of the rewritable register. A reading pin (pin 6) of the rewritable register U2 can be connected to the reading pin (6) of the main control circuit microprocessor U1. The writing pin (pin 5) and reading pin (pin 6) of said rewritable register U2 are respectively connected to a resistor R11 and a resistor R9 before being connected to a regulated power supply of 3.3 volts. Pins 1, 2, 3 and 4 of the rewritable register U2 can be grounded.

As shown in FIG. 5, the LCD control and display circuit 16 includes an LCD 44. The LCD is available from Jurong Smartgood Electronic Technology LTD. as part numer: KMC12864-AG-00-SBF. Three control signal pins 25, 26 and 24 of the main control circuit microprocessor are respectively connected to the three data pins 2, 3 and 1 of the LCD. Pin 4 of the LCD is grounded. Pin 5 of the LCD can be connected to the 3.3V power supply. Pins 6, 9 and 14 of the LCD are directly coupled together. The common junction thereof can be connected to pin 5 of the LCD and the 3.3V power supply after being connected to the capacitor C34. Pin 7 of the LCD can be connected to pin 8 of the LCD after being connected to the capacitor C12. Pin 11 of the LCD can be connected to pin 10 of the LCD after being connected with the capacitor C18. Pin 12 of the LCD can be connected to pin 13 of the LCD after being connected to the capacitor C35. Pin 15 of the LCD can be grounded after being connected with the capacitor. Pins 4∼15 of the LCD and the peripheral circuit together forms the voltage doubling circuit for driving the LCD to display images.

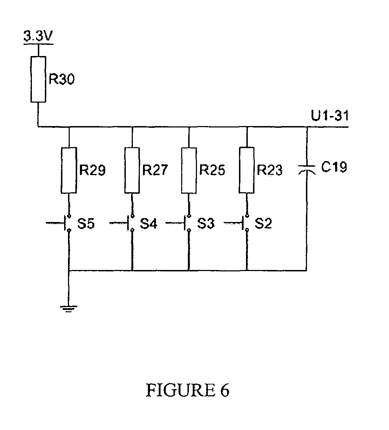

As shown in FIG. 6, the operation control circuit 14 includes a mode switch S5, a confirmation switch S2, a pageup switch S4 and a pagedown switch S3. The mode switch S5, confirmation switch S2, pageup switch S4 and pagedown switch S3 are mutually coupled via a parallel connection after being connected with a resistor R29, a resistor R23, a resistor R27 and a resistor R25 respectively. One output terminal of the parallel circuit can be grounded. Another output terminal can be connected to pin 31 of the microprocessor U1 of the main control circuit 12. Furthermore, the pin 31 of the microprocessor U 1 can be connected to the regulated power supply of 3.3 volts after being connected the resistor R30. At the same time, pin 31 can also be grounded after being connected to a resistor.

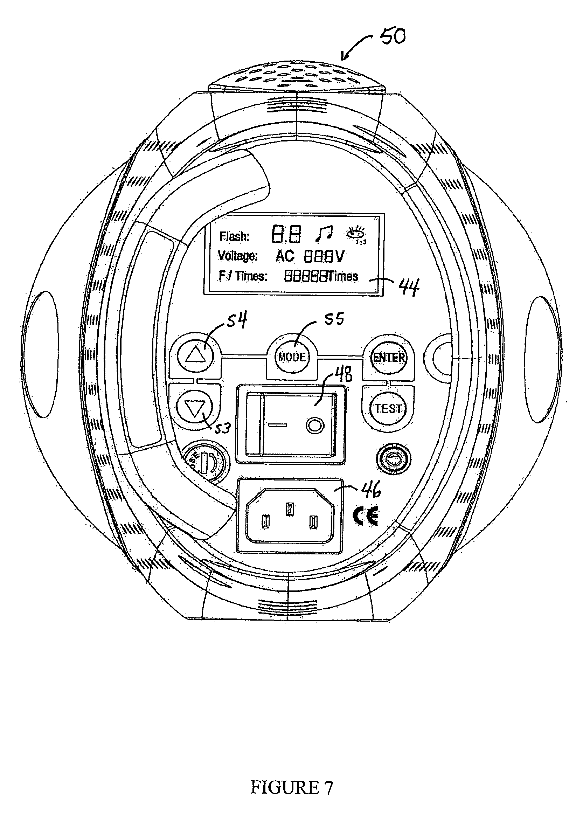

In one embodiment, content shown on the LCD 44 in a standby mode includes in FIG. 7 and as follows:
Voltage: 000V∼000V
Flash times: 0000
Flash: 2.0∼6.0
Beep: NO/OFF
Anti-red-eye (or photocell): 1∼3 and ON

As can be seen in FIG. 7, the LCD 44 is disposed on a back panel of the flash lamp device which also includes a receptacle 46 to receive a plug from a source of power and an ON/OFF switch 48 to turn the flash lamp device on and off. The LCD 44 can show a flash value as described later herein, a beep indicator (musical notes), a anti-red eye setting (or photocell setting) (eye with numbers of 1-3), a voltage supplied by the source of external power, and F/Times which can indicate generally the number of flashes remaining in the unit. The device can display from 0001 to 9999 to indicate the accumulative frequency. In this embodiment, the number of flash times can be guaranteed for up to 10,000 times.

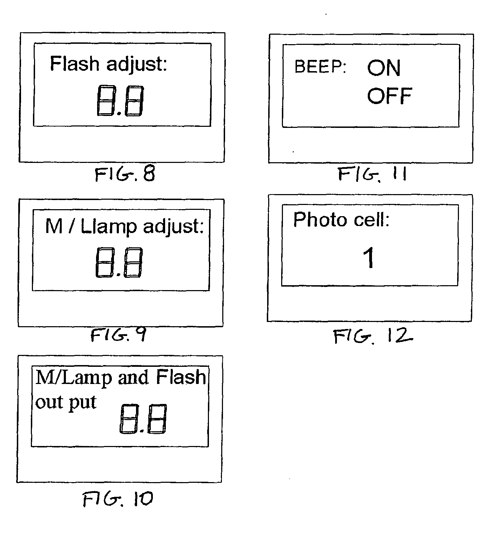

In the standby status, if the mode button S5 is pressed for a first time, the system will enter a menu to adjust the flash output.(See FIG. 8) By pressing the pageup switch S4 or the pagedown switch S3, the flash power can be set to within 2.0∼6.0. The flash power has five f/stop power outputs from 2.0 to 6.0 adjustable in 1/10 f/stop increments assuming ISO 100 sensitivity. Please see the following Table 1:

**TABLE 1**

| *Setting* | *Power* | *Guide Number* | *f*/*Stop at 10 ft.* |
|---|---|---|---|
| 6.0 | Full Power | Guide Number 220 | f/22 |
| 5.0 | ½ Power | Guide Number 160 | f/16 |
| 4.0 | ¼ Power | Guide Number 110 | f/11 |
| 3.0 | 1/8 Power | Guide Number 80 | f/8 |
| 2.0 | 1/16 Power | Guide Number 56 | f/5.6 |

The system returns to the standby menu if no button is pressed within five seconds or the confirmation button S2 is pressed. It is within the scope of the present invention to provide different flash power settings to this and other described modes.

If the mode button or selector S5 is pressed for the second time in the standby status or if pressed when the system enters a flash output adjustment menu, the system can enter the modeling lamp adjustment menu.(See FIG. 9) The modeling lamp voltage can be adjusted by pressing the pageup switch S4 or pagedown switch S3 to set the power of the modeling lamp (M/Lamp) to within 2.0∼6.0. (See Table 1) The number displayed will be the number selected with the pageup or pagedown switch. The system can return to the standby menu if no button is pressed within 5 seconds or the confirmation button S2 is pressed.

If the mode button S5 is pressed for the third time in the standby status or if pressed when the system enters the modeling lamp output adjustment menu, the system can enter the menu for adjusting the modeling lamp and flash output at the same time. By pressing the pageup switch S4 or pagedown switch S3, the intensity of the modeling lamp (M/Lamp) and the flash output can be adjusted at the same time to within 2.0∼6.0. (See FIG. 10) The system will return to the standby menu if no button is pressed within 5 seconds or the confirmation button S2 is pressed. The modeling light will turn off when the flash is triggered. The flash unit will retain these settings, even when the unit is turned off. When changing the power setting from a higher to a lower number, it is advisable to press the test button to release the current from the capacitor.

If mode button S5 is pressed for the fourth time or if pressed when the system enters the menu for adjusting the modeling lamp and flash output at the same time, the system can enter the menu for Beep settings. (See Fig. 11) By pressing the pageup switch S4 or pagedown switch S3, the Beep can be turned on or off (ON/OFF). The system can return to the standby menu if no button is pressed within 5 seconds or the confirmation button S2 is pressed.

If mode button S5 is pressed for the fifth time or if S2 is pressed when the system enters the menu for Beep settings for the first time, the system can enter the anti-red eye setup menu.(See FIG. 12) To select the level of anti-red eye, the pageup switch S4 or pagedown switch S3 can be pressed to set the times of Anti-red eye (1-3 or OFF). The number selected will be displayed and then will also be shown in the LCD 44 of FIG. 7. The device includes a photocell which can sense light output from other light sources and respond accordingly as described with respect to the anti-red eye settings. In these settings, the photocell senses the camera flash or flashes and responds depending on the settings described below. The photocell is located within a housing 50 located at a top portion of the flash lamp device.

When the Anti-red eye number is set to 1, the flash lamp device will flash synchronously when another flash is activated in the same area, such as the first flash of the camera. When it is set to 2, the flash lamp device will flash synchronously with a second flash of the camera and ignore the anti-red-eye flash, also known as the "preflash" which some cameras use. When it is set to 3, the flash lamp device will flash synchronously with the third flash of the camera and ignore two "anti-red-eye flashes" which some cameras use. When it is set to OFF, the flash lamp device will not flash. The system will return to the standby menu if no button is pressed within 5 seconds or the confirmation button S2 is pressed.

## Claims

1. A flash lamp device receiving power from an external power supply, the flash lamp device comprising a main control circuit (1) including a microprocessor and an operation control circuit (2), an LCD control and display circuit (3), coupled to the main control circuit, and a software module resident in the microprocessor, to control the LCD control and display circuit.

2. The flash lamp device of claim 1, further comprising a voltage detection circuit (4) coupled to the main control circuit (1).

3. The flash lamp device of claim 2, further comprising a regulated power supply, the regulated power supply including a current limiting and rectifying circuit including an output terminal, the current limiting and rectifying circuit being coupled to the positive pole of the external power supply, and a bleeder filter circuit having an output terminal, the bleeder filter circuit coupled to the output terminal of the current limiting and rectifying circuit, wherein the output terminal of the bleeder circuit is coupled to a pin of the microprocessor.

4. The flash lamp device of any preceding claim, further comprising a memory circuit (5), coupled to the main control circuit (1).

5. The flash lamp device of claim 4, wherein the memory circuit (5) includes a rewritable register, the writing output pin the rewritable register is coupled to the writing pin of the microprocessor, the reading pin of the rewritable register is coupled to the reading pin of the microprocessor, wherein the writing pin and reading pin of the rewritable register are respectively connected to a resistor before being connected to the regulated power supply.

6. The flash lamp device of any preceding claim, wherein the LCD control and display circuit (3) includes an LCD, with the three control signal pins of the microprocessor are respectively connected with the three data cable pins of the LCD, and the other pins of the LCD and the peripheral circuit together forms a voltage doubling circuit for driving the LCD to display images.

7. The flash lamp device according to any preceding claim wherein the operation control circuit (2) includes a mode switch (S5), a confirmation switch (S2), a pageup switch (S4), and a pagedown switch (S5), wherein the mode switch (S5), the confirmation switch (S2), the pageup switch (S4) and the pagedown switch (S3) are mutually coupled via a parallel connection after being connected to a resistor respectively, one output terminal of the parallel circuit being grounded, another output terminal being connected to a signal detection pin of the microprocessor and the signal detection pin being connected to the regulated power supply after being connected to a resistor, and at the same time, the signal detection pin is also grounded after being connected to a resistor.
